# EUROPEAN PATENT APPLICATION

(11) **EP 4 808 152 A1**
(43) Date of publication of application: **16.09.2026**
(21) Application number: 25163734.4
(22) Date of filing: 14.03.2025
(51) Int. Cl.: H04R 1/10, H02J 7/00, H04R 25/00

(54) **A CHARGER FOR CHARGING AT LEAST ONE HEARING DEVICE**

(71) Applicant: Sonova AG, 8712 Stäfa (CH)
(72) Inventor: Knoblauch, Thomas, 8645 Jona (CH); Scheidegger, Nino, 8032 Zürich (CH)
(74) Representative: Liedtke & Partner Patentanwälte

(57) **Abstract**

The invention relates to a charger (1) for charging at least one hearing device (3) having a rechargeable battery, the charger (1) comprising at least one charging bay (2) configured to receive a respective hearing device (3), the charging bay (2) having a set of electrically conductive contact elements (6) configured to contact corresponding electrically conductive contact elements (7) on the hearing device (3), wherein the charger (1) further comprises at least one electrically operated vibrator (4) configured to generate and transmit vibrations to the at least one charging bay (2).

## Description

### Technical Field

The invention relates to a charger for charging at least one hearing device.

### Background of the Invention

Hearing devices are operated by electrical energy from batteries. More and more hearing devices are equipped with rechargeable batteries. In order to recharge them, the hearing device is inserted in a charger. The energy for recharging may be transmitted from the charger to the hearing device by galvanic coupling of electrically conductive contacts or in a wireless way. Electrically conductive contacts need to be clean and require proper positioning of the hearing device in order to allow for the energy to be transmitted. Otherwise, the hearing device may remain uncharged despite being placed in the charger. Failure to charge may remain unnoticed until the user removes the hearing devices from the charger to use them.

### Summary of the Invention

It is an object of the present invention to provide a novel charger for charging at least one hearing device.

The object is achieved by a charger for charging at least one hearing device according to claim 1.

Preferred embodiments of the invention are given in the dependent claims.

According to the invention, a charger for charging at least one hearing device, e.g. a hearing aid or earbud, having a rechargeable battery is proposed, the charger comprising at least one charging bay configured to receive a respective hearing device, the charging bay having a set of electrically conductive contact elements configured to contact corresponding electrically conductive contact elements on the hearing device, wherein the charger further comprises at least one electrically operated vibrator configured to generate and transmit vibrations to the at least one hearing device and/or charging bay.

This vibration may shake the hearing device in such a way that it gets repositioned in the charging bay for better contact between the contact elements so the user gets relieved of that task.

In an exemplary embodiment, the charger further comprises circuitry configured to control and monitor a charging process of the at least one hearing device to detect degraded electrical contact between the electrical contact elements and to control the vibrator to generate vibrations in this case.

In an exemplary embodiment, the circuitry is configured to detect degraded electrical contact by detecting implausible values of a charging current, resistance or impedance at the contact elements.

In an exemplary embodiment, the circuitry is further configured to detect improved contact as a result of the vibration and to control the vibrator to terminate vibration in this case.

In an exemplary embodiment, the vibrator is arranged between two charging bays and comprises a mechanical element with two ends, each one contacting a respective one of the charging bays.

In an exemplary embodiment, a respective vibrator is arranged next to a respective charging bay, in mechanical contact to a wall of the charging bay.

In an exemplary embodiment, the vibrator comprises a flexible element extending through an opening in the wall into the charging bay so as to mechanically contact a hearing device located in the charging bay.

In an exemplary embodiment, the vibrator is arranged to generate at least primarily longitudinal vibrations directed in parallel to the wall of the charging bay, in particular in parallel to the part of the wall in which the electrically conductive contact elements are arranged. The vibration thus causes a shear movement between the electrically conductive contact elements of the charger and those of the hearing device, removing dirt and oxidation adherent to the contact elements.

In an exemplary embodiment, the vibrator is arranged to generate at least primarily longitudinal vibrations toward the charging bay, i.e. perpendicular to the wall of the charging bay. This may help moving the hearing device more vigorously increasing the probability of it moving into a target position if it has been positioned off the target position. Likewise, the vibrator may be arranged to generate vibrations in at least one different direction.

In an exemplary embodiment, the circuitry is configured to automatically start a vibration cycle using the at least one vibrator upon detecting insertion of a hearing device into one of the charging bays.

In an exemplary embodiment, the circuitry is configured to detect insertion of a hearing device by sensing changes in impedance or resistance measured at the contact elements or current drawn by these contact elements or a voltage drop at these contact elements, or by a switch mechanically operated by inserting a hearing device or by sensing presence of a magnet arranged in a hearing device by a magnetically sensitive sensor in the charger, or by sensing if a magnetic circuit in the charger which is open without a hearing device present, is closed by a magnetic or magnetizable material arranged in the hearing device. Other types of sensors, e.g. sensors configured to detect reflexion of light, may also be used.

In an exemplary embodiment, the vibrator is configured to generate a vibration pattern which is in mechanical resonance.

In an exemplary embodiment, the circuitry is configured to log degraded electrical contact events requiring vibrations and to inform a user via an optical, acoustical and/or haptic output, in particular by operating the vibrator, at the charger and/or via an app to clean the contact elements.

In an exemplary embodiment, the vibrator is configured to vibrate one or more retainment magnets arranged near the charging bay which are configured to interact with a magnetizable material in the hearing device, or wherein the vibrator comprises one or more solenoids arranged near the charging bay configured to interact with a magnetizable material in the hearing device to introduce a magnetic field when powered to vibrate the hearing device.

In an exemplary embodiment, the charging bays are located in a charging insert arranged within a housing of the charger.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

The present invention will become more fully understood from the detailed description given hereinbelow and the accompanying drawings which are given by way of illustration only, and thus, are not limitative of the present invention, and wherein:
- Figure 1: is a schematic view of a charger having two charging bays configured to receive a respective hearing device,
- Figure 2: is a schematic detail view of another embodiment of a charger, and
- Figure 3: is a schematic detail view of yet another embodiment of a charger.
Corresponding parts are marked with the same reference symbols in all figures.

### Detailed Description of Preferred Embodiments

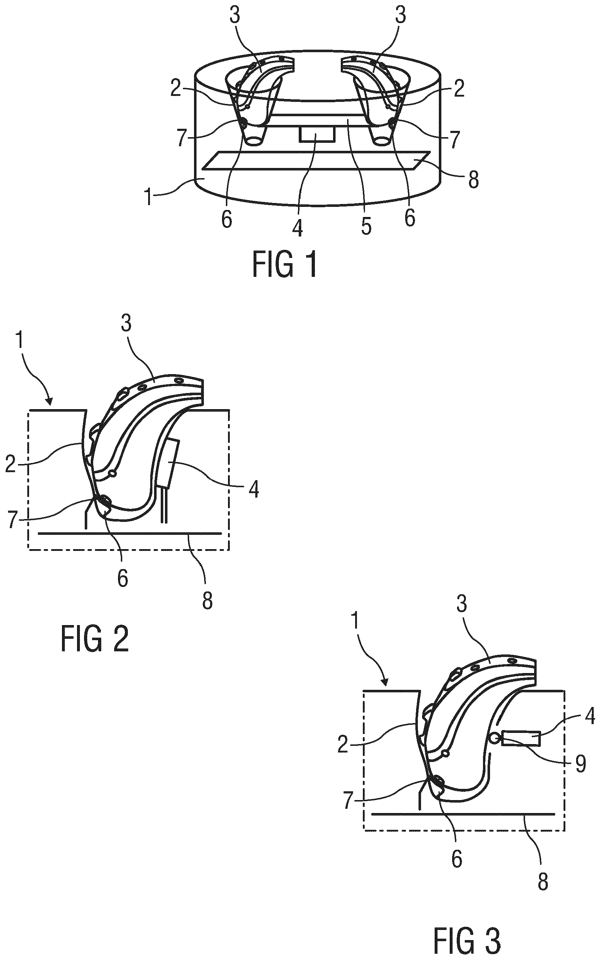

**Figure 1** is a schematic view of a charger 1 having two charging bays 2 configured to receive a respective hearing device 3 or an ear bud. The hearing devices 3 are respectively equipped with a rechargeable battery (not shown). The energy for recharging is transmitted from the charger 1 to the hearing device 3 using galvanic coupling of electrically conductive contact elements 6 on the charger 1 contacting electrically conductive contact elements 7 on the hearing device 3. The contact elements 6, 7 need to be clean and require proper positioning of the hearing device 3 in order to allow for the energy to be transmitted.

In order to ensure proper positioning of the hearing devices 3 in the charging bays 2, at least one electrically operated vibrator 4 is arranged in the charger 1, e.g. in a charging insert which may be arranged in a housing of the charger 1. The location of the vibrator 4 may be chosen to transmit a vibration to the hearing device 3 as best as possible.

The charger 1 may comprise circuitry 8 configured to control and monitor a charging process of the hearing devices 3, e.g. by measuring a charging current. Detection of an implausible charging current (e.g. charging current too low at sufficiently high charging voltage), resistance or impedance (higher than an expected value) by the circuitry 8 may indicate a charging error which may be due to improper placement of the hearing device 3 in the charging bay 2. When a charging error is detected, the circuitry 8 may operate the vibrator 4 to generate a vibration and transmit it to one or both hearing devices 3. This vibration may shake the hearing device 3 in such a way that it gets repositioned in the charging bay 2 for better contact. Improved contact as a result of the vibration may be detected using the same functionality of the circuitry as was used for detecting the charging error and may trigger termination of a vibration cycle. The circuitry 8 may comprise a printed circuit board.

In figure 1, the vibrator 4 is arranged between two charging bays 2 in the charger 1 and comprises a mechanical element 5 such as a bar 5 with two ends, each one contacting a respective one of the charging bays 2, which may be located in a charging insert arranged within a housing of the charger 1. The vibrator 4 may be arranged to generate at least primarily longitudinal vibrations directed toward the charging bays 2. In other embodiments, the vibrator 4 may have a different orientation. Likewise, the vibrator may be arranged to generate vibrations in at least one different direction, e.g. like or similar to a fork.

**Figure 2** is a schematic detail view of another embodiment of a charger 1. In figure 2, a respective vibrator 4 is arranged next to a respective charging bay 2 in the charger 1, contacting a wall of the charging bay 2, which may be located in a charging insert arranged within a housing of the charger 1. The vibrator 4 may be arranged to generate at least primarily longitudinal vibrations directed in parallel to the wall of the charging bay 2 in contact with the vibrator 4. In other embodiments, the vibrator 4 may have a different orientation, depending on the mechanics and vibration effects to be achieved.

**Figure 3** is a schematic detail view of another embodiment of a charger 1. In figure 3, a respective vibrator 4 is arranged next to a respective charging bay 2 in the charger 1 and comprises a flexible element 9 extending through an opening in the wall into the charging bay 2 so as to mechanically contact a hearing device 3 located in the charging bay 2. Vibration generated by the vibrator 4 thus propagates directly to the hearing device 3. The charging bay 2 may be located in a charging insert arranged within a housing of the charger 1. The vibrator 4 may be arranged to generate at least primarily longitudinal vibrations directed toward the charging bay 2. In other embodiments, the vibrator 4 may have a different orientation, depending on the mechanics and vibration effects to be achieved. Likewise, the vibrator may be arranged to generate vibrations in at least one different direction.

In an exemplary embodiment, the circuitry 8 may be configured to automatically start a vibration cycle using the at least one vibrator 4 upon detecting insertion of a hearing device 3 into one of the charging bays 2. The detection may be performed by sensing changes in impedance measured at the contact elements 6 or current drawn by these contact elements 6 or a voltage drop at these contact elements 6. Other methods of detection may involve a switch mechanically operated by inserting a hearing device 3 or by sensing presence of a magnet arranged in a hearing device 3 by a magnetically sensitive sensor in the charger, e.g. a hall sensor or a magnetoresistive sensor, or sensing if a magnetic circuit in the charger 1 which is open without a hearing device 3 present, is closed by a magnetic or magnetizable material arranged in the hearing device 3.

Automatically starting a vibration cycle upon insertion of the hearing device 3 would provide haptic feedback to the user as to whether the hearing device 3 is properly placed in the charger 1 and would also automatically clean the contact elements 6, 7. If required, additional vibration may be applied later.

The charger 1 may have a wired connection to an external energy source such as a wall outlet and/or may comprise an internal battery, in particular a rechargeable battery, as an internal energy source which may be recharged from the external energy source.

In an exemplary embodiment, the vibrator 4 is configured to generate a vibration pattern which is in mechanical resonance to have a particularly high probability for repositioning the hearing device 3.

In an exemplary embodiment, the circuitry 8 may be configured to log events in which implausible charging currents were detected so that vibrations had to be generated to reposition at least one of the hearing devices 3 and to inform the user, e.g. via an app, to clean the contact elements 6, 7. In other embodiments, the vibrator 4 can also be used for notifying the user.

In an exemplary embodiment, there may be one or more retainment magnets arranged near the charging bay 2. These retaining magnets may be configured to be tilted or vibrated using the vibrator 4 to reposition the hearing device 3.

In an exemplary embodiment, the vibrator 4 may comprise one or more solenoids (electro magnets) arranged near the charging bay 2 configured to introduce a magnet field when powered to shake or vibrate the hearing device 3 to reposition. The hearing device 3 may comprise a magnetic or magnetizable material interacting with said solenoid.

### List of References

- 1: charger
- 2: charging bay
- 3: hearing device
- 4: vibrator
- 5: mechanical element, bar
- 6: contact element
- 7: contact element
- 8: circuitry
- 9: flexible element

## Claims

1. A charger (1) for charging at least one hearing instrument (3) having a rechargeable battery, the charger (1) comprising at least one charging bay (2) configured to receive a respective hearing device (3), the charging bay (2) having a set of electrically conductive contact elements (6) configured to contact corresponding electrically conductive contact elements (7) on the hearing device (3), wherein the charger (1) further comprises at least one electrically operated vibrator (4) configured to generate and transmit vibrations to the at least one charging bay (2).

2. The charger (1) of claim 1, further comprising circuitry (8) configured to control and monitor a charging process of the at least one hearing device (3) to detect degraded electrical contact between the electrical contact elements (6, 7) and to control the vibrator (4) to generate vibrations in this case.

3. The charger (1) of claim 2, wherein the circuitry (8) is configured to detect degraded electrical contact by detecting implausible values of a charging current, resistance or impedance at the contact elements (6).

4. The charger (1) according to claim 2 or 3, wherein the circuitry (8) is further configured to detect improved contact as a result of the vibration and to control the vibrator (4) to terminate vibration in this case.

5. The charger (1) according to any one of the preceding claims, wherein the vibrator (4) is arranged between two charging bays (2) and comprises a mechanical element (5) with two ends, each one contacting a respective one of the charging bays (2).

6. The charger (1) according to any one of claims 1 to 4, wherein a respective vibrator (4) is arranged next to a respective charging bay (2), in mechanical contact to a wall of the charging bay (2).

7. The charger (1) of claim 6, wherein the vibrator (4) comprises a flexible element (9) extending through an opening in the wall into the charging bay (2) so as to mechanically contact a hearing device (3) located in the charging bay (2).

8. The charger (1) according to any one of claims 5 to 7, wherein the vibrator (4) is arranged to generate vibrations directed in parallel to the wall of the charging bay (2).

9. The charger (1) according to any one of claims 5 to 8, wherein the vibrator (4) is arranged to generate vibrations directed perpendicular to the wall of the charging bay (2).

10. The charger (1) according to any one of the preceding claims, wherein the circuitry (8) is configured to automatically start a vibration cycle using the at least one vibrator (4) upon detecting insertion of a hearing device (3) into one of the charging bays (2).

11. The charger (1) according to claim 10, wherein the circuitry (8) is configured to detect insertion of a hearing device (3) by sensing changes in impedance or resistance measured at the contact elements (6) or current drawn by these contact elements (6) or a voltage drop at these contact elements (6), or by a switch mechanically operated by inserting a hearing device (3) or by sensing presence of a magnet arranged in a hearing device (3) by a magnetically sensitive sensor in the charger (1), or by sensing if a magnetic circuit in the charger (1) which is open without a hearing device (3) present, is closed by a magnetic or magnetizable material arranged in the hearing device (3).

12. The charger (1) according to any one of the preceding claims, wherein the vibrator (4) is configured to generate a vibration pattern which is in mechanical resonance with at least one component of the charger (1).

13. The charger (1) according to any one of the claims 2 to 12, wherein the circuitry (8) is configured to log degraded electrical contact events requiring vibrations and to inform a user via an optical, acoustical and/or haptic output, in particular by operating the vibrator (4), at the charger (1) and/or via an app to clean the contact elements (6, 7).

14. The charger (1) according to any one of the claims 1 to 4 and 8 to 13, wherein the vibrator (4) is configured to vibrate one or more retainment magnets arranged near the charging bay (2) which are configured to interact with a magnetizable material in the hearing device (3), or wherein the vibrator (4) comprises one or more solenoids arranged near the charging bay (2) configured to interact with a magnetizable material in the hearing device (3) to introduce a magnetic field when powered to vibrate the hearing device (3).

15. The charger (1) according to any one of the preceding claims, wherein the charging bays (2) are formed as replaceable charging inserts arranged within a housing of the charger (1).
